# EUROPEAN PATENT APPLICATION

(11) **EP 1 962 478 A1**
(43) Date of publication of application: **27.08.2008**
(21) Application number: 07300817.9
(22) Date of filing: 22.02.2007
(51) Int. Cl.: H04M 1/247, H04M 1/725, H04Q 7/32, H04M 1/2745

(54) **Method and device to order menus on a terminal system of an end-user**

(71) Applicant: GEMPLUS, 13420 Gémenos (FR)
(72) Inventor: Brule, Gilles, 13012 Marseille (FR)

(57) **Abstract**

The invention relates to a method and device to order menus on a terminal system of an end-user.

This method for displaying items (400) corresponding to services available in a personal token (100), is based on memorizing a table (300) corresponding to item(s) selection(s) of a end-user as to personal relevancy of the services, and reading the table of relevancy (300) for displaying the menu items (400) in an order defined by the content of the table (300) of personal relevancy as pre-memorized in the personal token.

## Description

The invention relates to a method and a device to order menus on a terminal system of an end-user, in order to facilitate for the end-user the menu browsing. More particularly, the invention relates to a method implemented on a device, to provide a friendlier and easy to use way for ordering and displaying menus choices available on mobile device end-users.

Nowadays, such menus relate to STK (SIM Tool Kit) applications stored into personal tokens, such as SIM (Subscriber Identity Module).

Currently, as disclosed in 3GPP standards, the personal token is in charge of building a menus items list when the associated mobile terminal is switched ON (hardware reboot) or reset (soft reboot). This first level menu items list will then be displayed every time the mobile device end-user asks for, using dedicated menus.

As such services are getting more and more numerous, and more and more elaborate; the mobile terminal end-user has to face a strong complexity using such menus, this problem not being solved by standardised implementations of first level menu items list.

SIM Toolkit Menus containing useful services provided by the operator are indeed embedded inside the subscriber identity module. The items present in the menu are ordered, based on the choice of the operator and are fixed for all subscribers. Therefore it can be cumbersome for the user to access his favourite menus, especially if these one are placed at the bottom of the menu.

At the end of the day, the mobile device end-user can give up if the interesting item is too far away.

It is thus desirable to provide a portable and user friendly way to facilitate for mobile terminal end-user the usage of such services menus. This purpose is achieved by way of the invention as recited in the appended claims.

Other purposes, benefits and aspects of the invention will appear through the following description, which is made in reference to the appended figures, among which:
- figure 1 represents the way the first level menu items list is managed and is then displayed on the screens of the mobile terminal end-user using known standardized features.
- Figure 2 represents a flowchart showing a sequence of steps describing one embodiment of the disclosed invention, showing the way the first level menu items list is built and will then be displayed on the screen of the end-user mobile device 400.

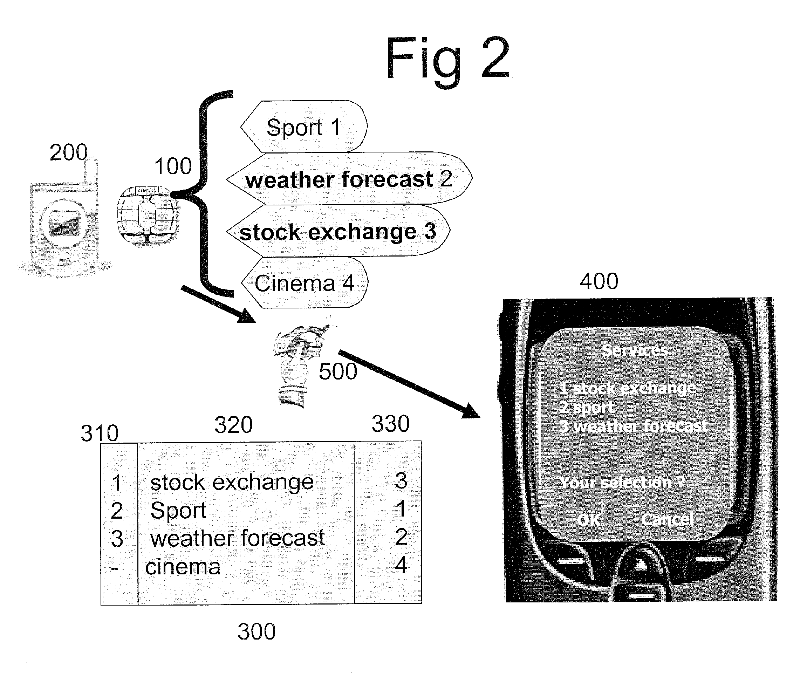

As disclosed in Figure 2, when the end-user mobile terminal system made of a mobile terminal 200 and a personal token 100 detects a need of building such a first level menu items list, then, without any action from the mobile terminal end-user, and before any menu display on the screen of the mobile device of the end-user, due to one embodiment of the disclosed invention, the first level menu items list will then be built in a particular way 300.

Once build, the said first level menu items list can be stored locally and reside on the personal token 100, also referenced as an UICC card, SIM (Subscriber Identity Module), USIM (Universal Subscriber Identity Module), ISIM (IP Multimedia Services Identity Module), Mega SIM, any other smart card or an integrated chip, on the mobile device or on a remote server.

The invention involves as well a dedicated application to provide an automatic building method of the first level menu items list.

According to one aspect of the invention, this application is an applet stored into the personal token.

Hereafter, an embodiment of the invention will be described wherein the end-user is switching ON his mobile terminal, a handset, associated to a subscriber identity module, and connected via a mobile radio communication network such as GSM or 3G telecommunication network.

On the said subscriber identity module (SIM), in a dedicated memory such as a ROM memory, flash memory or EEPROM memory, a dedicated application is stored. The application can be installed into the memory of the card during personalization step, before putting it on the market or installed using Over the Air (OTA) infrastructure.

This dedicated application can as well be stored into the mobile terminal memory, in another embodiment.

However, those skilled in the art should recognize that the method is applicable to handset but also to other types of mobile systems, including mobile devices, such as PDA (personal digital assistant), smartphone, operable either on the same network or different networks.

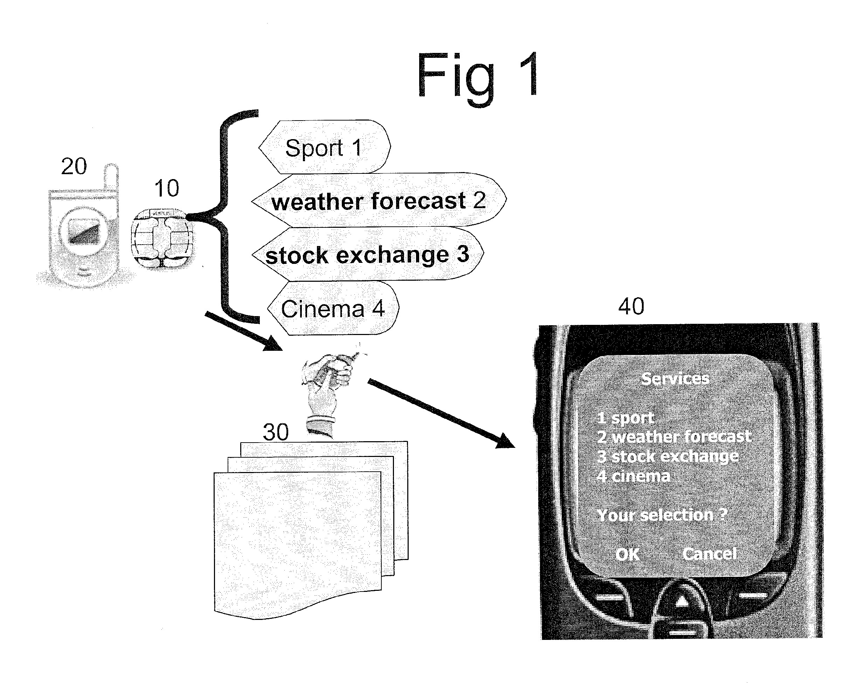

Figure 2 shows the main screens the end-user will see when using such implementation of the disclosed solution whereas figure 1 shows the screens the mobile terminal end-user will see without the invention.

In figure 1, when putting the mobile terminal ON, the end-user will see nothing on the screen of the mobile terminal screen indicating the first level menu items list is currently built. He'll then have to scroll into several menus in order to be able to read the content of this services menu. The said services menu always stays static whatever the end-user wants to change concerning the item's order or availability.

More particularly, for SIM Toolkit Menus, allowing the end-user to discover and use local or on-line services provided by STK applets previously stored into the personal token, a standardized solution described on figure 1 is described. This solution is based on a dedicated number stored into every service applet stored on the personal token itself, this number being the position of the service name of this applet into the first level menu.

If the telecommunication operator operating such services wants to make change(s) in the services menu, for example change the position of the items in the menu, he'll have to erase the applets and install new versions of them on the personal device (with new dedicated associated numbers stored on the personal token). This can be done on a point of sale or using OTA (Over The Air) applet download solutions so it's quite expensive and available only to telecommunication operator himself.

As shown on figure 2, with the invention, on hardware or software mobile terminal 200 reset, a dedicated application (not shown) stored into the subscriber identity module 100 is activated, allowing the automatic build of the first level menu items list.

Referring to Figure 2, in order to get more in details, the present implementation is based on the usage of SIM toolkit standardized commands.

The preferred implementation can in one embodiment rely on a dedicated application, being optionally part of Card Operating System, which manages in this case the position of the menus inside the card.

A dedicated field of each menu item, also called service title, is reserved in a dedicated table 300, and updated by the dedicated application implementing the disclosed solution, at the installation of each service applet on the personal token.

This table includes but is not limited to, at least, for every service applet installed into the card:
- a field with a string 320, this string being the title of the first level menu item corresponding to this service applet,
- The previously used number 330 being the position chosen by the telecommunication operator for this service applet into the first level menu items list. This number can be, According to some embodiments of the method of the disclosed invention, the default position of this service applet into the first level menu items list ;
- The new number 310 being the position chosen by the mobile terminal end-user for this service applet into the first level menu items list.
- This number can be valuated in one embodiment of the disclosed invention, to a default value such as (-1) in one example, in case the end-user decided not to use such a service. This new number 310 can be entered by the user through a specific application provided in one embodiment.

It can be valuated using preferences rules or most used services as another example. In this last case, the dedicated application (or even another dedicated application) will count the number of access to each sub-menu item of this service of the first level menu, catching envelope Menu Selection command (described in ETSI ts102223).

Advantageously, a classification of the services from the most used service to the less used service is performed.

At mobile terminal reset, the dedicated application reorders the first level menu items list with the most used items at the first place, using the dedicated table 300. When the new menu is then sent to the handset, it is ordered taking into account such customer relevancy.

At customer selection, the menu will appear ordered on the mobile terminal screen 400.

Screen can be any visualisation mean such as a tactile screen, a more classical phosphorescent surface on which an image is displayed, as on a television, computer monitor, or mobile handset.

The dedicated application (not shown) implementing the disclosed invention is preferably stored on the personal token being a subscriber identity module.

This personal token is, depending of the technology used by the telecommunication operator in charge of the used network, a subscriber Identity module (SIM), a USIM (UMTS Subscriber Identity Module) or an ISIM (IP multimedia Service Identity Module).

According to one embodiment, this subscriber identity module can be a piece of software, the dedicated said application being in this case also a piece of software.

According to one other embodiment, this dedicated SIM toolkit application is stored in the subscriber identity module memory for implementing the above disclosed method. Such an application is also known as an applet, or more specifically a cardlet, when implemented on a Java^{™} card type of subscriber identity module. Hereafter, this application will be referred to as an agent application. The subscriber identity module processor executes this agent application.

Although the mobile terminal and the personal token are shown and described to be linked devices, it should not be construed to be limited as such. They can be as example two separate devices communicating using contactless channels such as infrared IrDA or ISO 14443.

Accordingly, these devices operate on networks including a public switched telephone network (PSTN), a mobile communication network, an Internet protocol (IP) network, etc. The communication session may be a voice or a data communication session. Examples of a data communication session include, but are not limited to, audio streaming, video streaming, video conferencing, Voice Over IP (VOIP) etc.

In a preferred embodiment, this standalone application stored into the personal token 100 will be activated on the hardware or software reboot of the mobile device 200, in order to build first level menu items list 300 and send it to the mobile device that will display it on the screen of the end-user mobile device 400.

There are several ways by which the said application can build first level menu items list: The first level menu items can be arranged in various orders according to various algorithms.

For example, putting the less used items at the first place can be a good way for the telecommunication operator to push the usage.

Some items positions can be stick on operator demand in a particular embodiment.

The first level can as well be rearranged putting in first position the menu items provided by the last installed application, allowing the operator to push for new services.

In another embodiment, a threshold can be defined so that only the items often used are placed in the first level menu items list.

The first level menu items can be repositioned at boot sequence only, or for each usage of the menu.

Other additional optional steps can be added in the disclosed method, such as, in one embodiment, another dedicated application can be available allowing the end-user to predefine a list of topics he's interested in so that the build of the first level menu items list can be made taking into account such parameters.

These different additional steps include, but are not limited to, usage of usual man to machine interface as used onto mobile terminal screen.

The first level menu items list can be as well based on bitmap or icons usage, or even audio messages for blind people, as example.

This invention provides telecommunication operator a segmented and adapted offer for each customer: the mobile terminal end-user is always obliged to waste time scrolling menus, in order to access the services stored into the subscriber identity module and even when using a new mobile terminal, buying a new handset as an example, the end-user can have the same user experience.

The invention can indeed be implemented on all the mobile systems available on the market in the same way, with the same end-user experience as it is a portable solution that can be used on every handsets, whatever its brand and model.

## Claims

1. A method for displaying items (400) corresponding to services available in a personal token (100), the personal token pre-storing the services with associated menu items to be displayed, method **characterized in that** it comprises
- the preliminary step which consists in memorizing a table (300) corresponding to item(s) selection(s) of a end-user (500) as to relevancy of the services,
- and a step of reading the table of relevancy (300) for displaying the menu items (400) in an order defined by the content of the table of relevancy (300) as pre-memorized in the personal token (100).

2. The method according to claim 1, **characterized in that** the personal token is an UICC card.

3. The method according to claim 1 or 2, **characterized in that** the personal token is a subscriber Identity module.

4. The method according to one of claim 1 to 3 **characterized in that** the step of memorizing a table of relevancy (300) consists in analyzing the behavior of the end-user as to preceding choices in menus.

5. The method according to one of claim 1 to 3 **characterized in that** the step of memorizing a table of relevancy (300) consists in questioning the end-user as to personal relevancy of the services for the end-user.

6. The method according to claim 5 **characterized in that** the questioning consists in proposing to the end-user to input a preferred order of display of the menu items.

7. The method according to claim 5 or 6, **characterized in that** :
- the interrogating is performed using a Web terminal,
- results of it are retrieved by a remote server,
- and results are sent in the personal token (100).

8. The method according to one of claims 5 or 6, **characterized in that** :
- the interrogating is performed using a dedicated application stored into the personal token (100),
- results of it are retrieved by the said application,
- and stored in the personal token (100).

9. A terminal system comprising a mobile terminal (200) and a personal token (100), which terminal system stores and runs instructions for displaying items (400) corresponding to services available in the personal token (100), the personal token pre-storing the services with associated menu items to be displayed, **characterized in that** the instructions induce the terminal system into performing:
- a preliminary step which consists in memorizing a table (300) corresponding to item(s) selection(s) of a end-user as to relevancy of the services,
- a step of reading the table of relevancy (300) for displaying the menu items (400) in an order defined by the content of the table of relevancy (300) as pre-memorized in the said terminal system (100, 200).

10. A personal token (100) for being associated to a terminal (200), the said personal token pre-storing the services with associated menu items to be displayed and being **characterized in that** it stores and runs instructions which induce the personal token into performing:
- a preliminary step which consists in memorizing a table (300) corresponding to item(s) selection(s) of a end-user as to relevancy of the services,
- a step of reading the table of relevancy (300) for displaying the menu items (400) in an order defined by the content of the table of relevancy (300) as pre-memorized in the said personal token (100).
